# EUROPÄISCHE PATENTANMELDUNG

(11) **EP 0 964 335 A2**
(43) Veröffentlichungstag der Anmeldung: **15.12.1999**
(21) Anmeldenummer: 99440122.2
(22) Anmeldetag: 28.05.1999
(51) Int. Cl.: G06F 11/14

(54) **Verfahren zum gesicherten Ändern von in einer Datenbank gespeicherten Daten, Datenbanksystem und damit ausgestattetes Netzelement**

(30) Priorität: 12.06.1998 DE 19826091
(71) Anmelder: ALCATEL, 75008 Paris (FR)
(72) Erfinder: Sembach, Frank, 70969 Stuttgart (DE); Rietzke, Arno, 70563 Stuttgart (DE)
(74) Vertreter: Brose, Gerhard, Dipl.-Ing.

(57) **Zusammenfassung**

Um Daten in einer Datenbank DB so zu ändern, daß bei einer Störung die Datenbank in einen Ausgangszustand zurückgeführt werden kann, wird vorgeschlagen, die Blocknummern BNO von freien Speicherblöcken BL* in einen nicht-flüchtigen Halbleiterspeicher NVM zwischenzuspeichern. Im Falle einer Störung, wird der freie Speicherblock BL* weiterhin als freier Speicherblock verwaltet. Im Falle einer ungestörten, erfolgreichen Änderung der Daten, wird derjenige Speicherblock BL freigegeben, in dem die alten Daten gespeichert waren. Die Erfindung ist besonders gut einsetzbar in Datenbanksystemen für Netzelemente eines digitalen Nachrichtenübertragungsnetzes, insbesonders für Cross-Connects eines SDH Netzes (SDH: Synchrone Digitale Hirarchie).

## Beschreibung

Im Bereich der digitalen Nachrichtenübertragungsnetze, insbesondere im Bereich der SDH-Netze (SDH: Synchrone Digitale Hierarchie), ist für jedes Netzelement eine Datenbank vorhanden, in der Daten über die aktuelle Netzkonfiguration gespeichert sind. Netzelemente werden auch allgemein als Knoten bezeichnet.

Aus US 5,524,205 ist ein Verfahren zum gesicherten Ändern von Daten bekannt, die in einer Datenbank innerhalb von Speicherblöcken gespeichert sind. Die dort beschriebene Datenbank ist auf einer Festplatte eingerichtet und enthält Daten über den Zustand eines Knotens innerhalb eines Datenverarbeitungssystems, die aktuallisiert werden in Form von sogenannten "transactions". Eine "transaction" entspricht einem Änderungsvorgang, bei dem mehrere Daten geändert werden, um mindestens einen Knoten des Systems von einem Zustand in den nächsten zu überführen. Die Datenbank und zwei Zwischenspeicher ("undo buffer" und "redo buffer") bilden ein Datenbanksystem, das sicherstellen soll, daß das System von einem definierten Zustand ausgehend erneut gestartet werden kann, falls es beim Ändern der Daten zu Störungen kommen sollte. Dazu führt das Datenbanksystem ein als "recovery" bezeichnetes Verfahren aus, bei dem vor Beginn des Änderungsvorgangs ("transaction") in den einen Zwischenspeicher ("undo buffer") Daten über den letzten Zustand des Knotens gespeichert werden und bei dem während des Änderungsvorgangs in den anderen Zwischenspeicher ("redo buffer") Daten über den nächsten Zustand des Knotens gespeichert werden. Wurde der Änderungsvorgang nicht gestört, so beschreiben die im "redo buffer" gespeicherten Daten den aktuellen Zustand des Knotens. Wurde hingegen der Änderungsvorgang gestört, so beschreiben die im "undo buffer" gespeicherten Daten den aktuellen Zustand, von dem aus das System neu gestartet werden kann. Bei dem in US 5,524,205 beschriebenen Verfahren und bei dem dort beschriebenen System sind Schreib-/Lesezugriffe auf zwei Zwischenspeicher erforderlich, was eine aufwendige und langsame Speicherverwaltung bedeutet.

In dem Artikel "Technologie der SDH-Netzelemente: die Software-Plattform" von S. Colombo et. al., erschienen in der von der Anmelderin publizierten Zeitschrift "Elektrisches Nachrichtenwesen", Band 4/1993, Seiten 321-327, werden der Einsatz von objektorientierten Datenbanken innerhalb von Netzelementen eines SDH-Nachrichtenübertragungsnetzes (Synchrone Digitale Hierachie) beschrieben und die Speicherverwaltung sowie die Funktion zur dauerhaften Speicherung (persistency) angesprochen. Ein Verfahren oder eine Vorrichtung zur gesicherten Änderung der gespeicherten Daten wird dort nicht näher beschrieben. Eine allgemeine Beschreibung über SDH-Netzelemente und deren Management findet sich in derselben Zeitschrift, auf Seiten 329-337, in dem Artikel "Management von SDH-Netzelementen: eine Anwendung der Informationsmodellierung" von M.P. Bosse et. al.

Aufgabe der Erfindung ist es, ein Verfahren zum gesicherten Ändern von Daten, die in einer Datenbank gespeichert sind, sowie ein Datenbanksystem bereitzustellen, mit denen auf einfache Weise eine schnelle Speicherverwaltung durchgeführt werden kann. Außerdem soll ein Netzelement für ein digitales Nachrichtenübertragungsnetz in einem solchen Datenbanksystem vorgeschlagen werden.

Die Aufgabe wird gelöst durch ein Verfahren mit den Merkmalen nach Anspruch 1 und durch ein Datenbanksystem sowie durch ein Netzelement mit den Merkmalen nach einem der nebengeordneten Ansprüche.

Demnach wird ein Verfahren vorgeschlagen, bei dem für die neuen Daten innerhalb der Datenbank ein freier Speicherblock gesucht wird, bei dem dessen Blocknummer in einem nicht-flüchtigen Halbleiterspeicher zwischengespeichert wird und bei dem geprüft wird, ob das Speichern der neuen Daten in den freien Speicherblock gestoppt wurde, um im Falle einer Störung den freien Speicherblock weiterhin als solchen zu verwalten.

Dadurch wird erreicht, daß die neuen Daten, die die alten Daten ersetzen sollen, nur in freie Speicherblöcke geschrieben werden, wodurch keine alten Daten überschrieben werden. Damit stehen im Fall einer Störung die alten Daten vollständig zur Wiederherstellung des Systems zur Verfügung. Zur Änderung der Daten wird die Datenbank von einer Steuerung gesteuert, die auf den nicht-flüchtigen Halbleiterspeicher zugreift und dort die Blocknummern der zu beschreibenden Speicherblöcke zwischenspeichert und verwaltet, so daß bei einer Störung alle Blocknummern zur Verfügung stehen, die die an der Änderung der Daten beteiligten Speicherblöcke angeben. Durch den Einsatz eines Halbleiterspeichers wird außerdem die Verwaltung der Datenbank erheblich beschleunigt.

Weitere Vorteile ergeben sich aus den Unteransprüchen.

Besonders vorteilhaft ist es, wenn im Zusammenhang mit einer Transaktion, jeweils nur die Blocknummern des ersten Speicherblockes eines Speicherbereiches, die Anzahl der Speicherblöcke sowie die Transaktionsnummer in dem nicht-flüchtigen Halbleiterspeicher zwischengespeichert werden. Dadurch wird erreicht, daß genügend Angaben zur eindeutigen Identifizierung der von der Transaktion betroffenen Speicheblöcke, also zur Identifizierung des betroffenen Blocknummernbereichs, zwischengespeichert sind. Im Falle einer Störung kann die Transaktion jederzeit rückgängig gemacht werden. Zugleich wird nur wenig Speicherplatz benötigt.

Es ist besonders vorteilhaft die Erfindung in einem Netzelement einzusetzen, das als Cross-Connect, als Add-Drop-Multiplexer oder Leitungsmultiplexer für ein SDH Nachrichtenübertragungsnetz eingesetzt wird.

Im folgenden wird die Erfindung näher anhand eines Ausführungsbeispieles und unter Zuhilfenahme der Figuren beschrieben:
- Fig. 1,: die schematisch den Aufbau eines Datenbanksystems zeigt;
- Fig. 2,: die das Ablaufdiagramm eines Verfahrens zur Änderung der Daten zeigt;
- Fig. 3a,: die Momentaufnahmen vom Dateninhalt der Speicherblöcke im Verlauf einer ungestörten Änderung wiedergibt, und
- Fig. 3b,: die Momentaufnahmen vom Dateninhalt der Speicherblöcke im Verlauf einer gestörten Änderung wiedergibt.

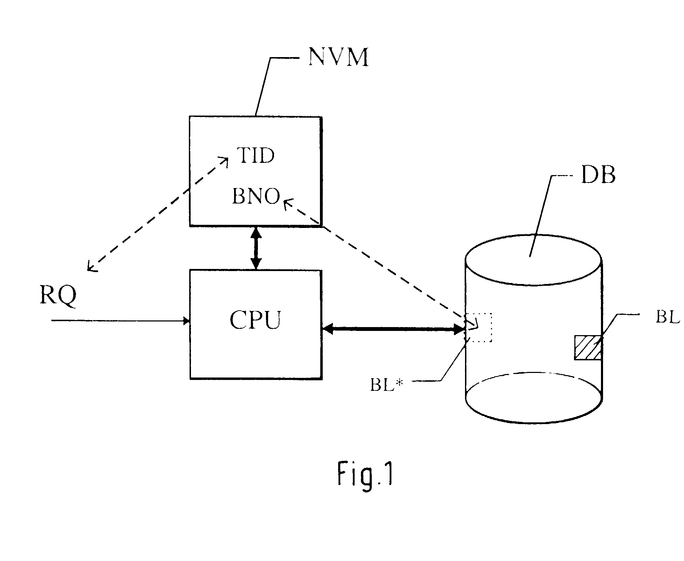

Fig. 1 zeigt ein Datenbanksystem mit einer Datenbank DB, einer damit verbundenen Steuerung CPU und einem damit verbundenen nicht-flüchtigen Halbleiterspeicher NVM. Das Datenbanksystem ist Bestandteil eines Netzelementes für ein SDH Nachrichtenübertragungsnetz. Die Datenbank DB besteht aus einer Festplatte, deren Verwaltung von der Steuerung CPU gesteuert wird. Die Steuerung steuert vor allem die Schreiblesezugriffe auf die Festplatte, um Daten in Speicherblöcke zu schreiben bzw. Daten aus Speicherblöcken zu lesen.

In Fig. 1 sind beispielhaft zwei Speicherblöcke BL und BL* dargestellt. Im Speicherblock BL* sind noch keine Daten gespeichert. Das heißt dieser Speicherblock BL* ist ein freier Speicherblock, in den neue Daten gespeichert werden können, ohne bereits auf der Datenbank abgespeicherte alte Daten überschreiben zu müssen. Die Steuerung CPU steuert auch den Zugriff auf den nicht-flüchtigen Halbleiterspeicher NVM, der beispielsweise aus einem batterie-gepufferten RAM (random access memory) besteht.

Sollen nun Daten, die in der Datenbank abgelegt sind, geändert werden, so erhält die Steuerung ein Signal RQ, das einem Änderungswunsch entspricht. In diesem Beispiel löst der Änderungswunsch RQ eine Transaktion aus, der eine bestimmte Transaktionsnummer TID zugeordnet wird. Die Steuerung CPU speichert die letzte gültige Transaktionsnummer TID innerhalb des nicht-flüchtigen Halbleiterspeichers NVM. Als Transaktion wird hier eine vollständige Bearbeitung mehrerer Änderungswünsche - sogenannter "requests"- verstanden. Das bedeutet, daß eine Transaktion nur dann als erfolgreich abgeschlossen gilt, wenn alle Änderungswünsche bearbeitet werden konnten. Mit anderen Worten: Innerhalb einer Transaktion müssen alle requests mit Erfolg bearbeitet werden (atomarer Ablauf). Die Steuerung CPU sucht nach freien Speicherblöcken in der Datenbank DB. Für eine Transaktion werden mindestens zwei aufeinanderfolgende Speicherblöcke benötigt, von denen in Fig. 1 exemplarisch nur einer BL* dargestellt ist. Die Blocknummern BNO dieser freien Speicherblöcke bilden einen Blocknummernbereich, von dem die erste Blocknummer und die Anzahl der Speicherblöcke in dem nicht-flüchtigen Halbleiterspeicher NVM zwischengespeichert werden. Nun können die Daten geändert werden.

In diesem Beispiel sollen die alten Daten, die in dem Speicherblock BL gespeichert sind, durch die neuen Daten ersetzt werden, die in die freien Speicherblöcke BL* gespeichert werden sollen. Aufgrund einer Anfrage RQ werden die Speicherblöcke BL* für die neuen Daten reserviert. Die neuen Daten werden von der Steuerung CPU in die Datenbank geschrieben. Ist der Schreibvorgang abgeschlossen, so können die alten Daten in einem späteren Schritt gelöscht oder überschrieben werden. Dazu werden die Speicherblöcke BL wieder freigegeben.

Wird jedoch der Schreibzugriff auf die Datenbank gestört, beispielsweise durch einen Stromausfall im Netzelement, so kann der alte Zustand wie folgt wieder hergestellt werden:

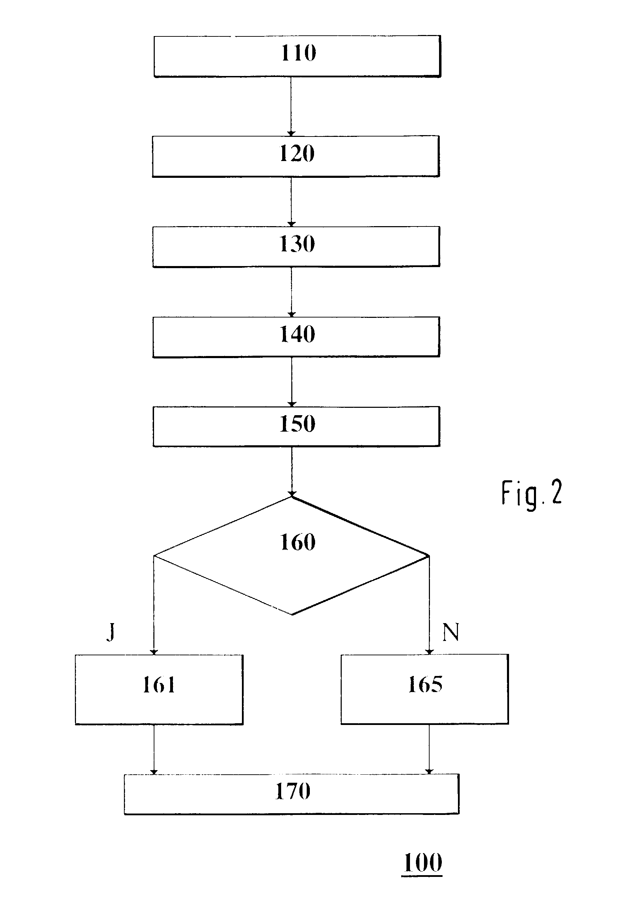

Der Speicherblock BL* wird so verwaltet, als sei er noch nicht aufgrund einer Anfrage RQ für die neuen Daten reserviert worden. Der alte Speicherblock BL wird in diesem Fall nicht freigegeben. Dadurch daß in dem nicht flüchtigen Halbleiterspeicher die Blocknummern der zu beschreibenden Speicherblöcke BL* zwischengespeichert wurden, kann die Steuerung feststellen, welche Speicherblöcke von der Störung betroffen sind. Wenn im Verlauf einer Transaktion mehrere Speicherblöcke beschrieben werden, so ist es vorteilhaft, lediglich die Blocknummer des ersten und des letzten Speicherblockes in den nicht-flüchtigen Halbleiterspeicher NVM zwischen zu speichern. Über die im Haöbleiterspeicher gespeicherten Transaktionsnummern TID kann die Steuerung feststellen, welche Transaktion gestört wurde, und kann eine entsprechende Fehlermeldung an die anderen Netzelemente absenden. Das von der Steuerung CPU ausgeführte erfindungsgemäße Verfahren wird nun näher anhand Fig. 2 und unter Bezugnahme auf Fig. 1 näher beschrieben:

Fig. 2 zeigt das Ablaufdiagramm eines Verfahrens 100 zum sicheren Ändern von Daten, die in dem zuvor beschriebenen Datenbanksystem gespeichert und verwaltet werden. In einem ersten Schritt 110 wird zunächst geprüft, ob ein Signal RQ, das einem Änderungswunsch entspricht, empfangen wird. Es wird also geprüft, ob eine Transaktion durchgeführt werden soll. Ist dies der Fall, so wird in einem Schritt 120 dieser Transaktion anhand der aktuellen Transaktionsnummer aus dem Halbleiterspeicher eine neue Transaktionsnummer TID zugewiesen. In einem nachfolgenden Schritt 130 werden nun freie Speicherblöcke BL* innerhalb der Datenbank DB gesucht, die zusammen einen freien Speicherbereich bilden. Die erste Blocknummer dieses freien Speicherbereichs und die Anzahl der Speicherblöcke werden in den nicht-flüchtigen Halbleiterspeicher geschrieben. Der nicht-flüchtige Halbleiterspeicher dient also als Speicher für die Transaktionsnummer und die entsprechenden den Speicherbereich kennzeichnenden Angaben, wie erste Blocknummer und Anzahl. Anstelle dieser Angaben können auch die erste und die letzte Blocknummer des Speicherbereichs (Blocknummernbereichs) gespeichert werden.

Dann werden in einem nächsten Schritt 140 die neuen Daten, die die alten Daten ersetzen sollen, in die freien Speicherblöcke geschrieben. Es wird nun im Schritt 160 geprüft, ob das Schreiben störungsfrei durchgeführt wurde. Das bedeutet, daß die von der Steuerung gesteuerten Schreibzugriffe überwacht werden. Ist keine Störung aufgetreten, so werden in einem Schritt 161 die Blocknummer BNO des freien Speicherblocks bzw. die entsprechenden Angaben für den Speicherbereich aus dem Halbleiterspeicher gelöscht, es wird die der Transaktion in Schritt 120 zugewiesene Transaktionsnummer TID als neue aktuelle Transaktionsnummer im Halbleiterspeicher abgespeichert und es wird derjenige Speicherblock freigegeben, in dem die alten Daten gespeichert waren. Wurde jedoch im Schritt 160 eine Störung festgestellt, so wird in einem Schritt 165 der freie Speicherblock, in den die neuen Daten geschrieben werden sollten, weiterhin als freier Speicherblock verwaltet. In einem abschließenden Schritt 170 werden eventuell neue auftretende Änderungswünsche verzögert, bis das Speichern aufgrund des vorhergehenden Änderungswunsches RQ erfolgreich beendet werden konnte.

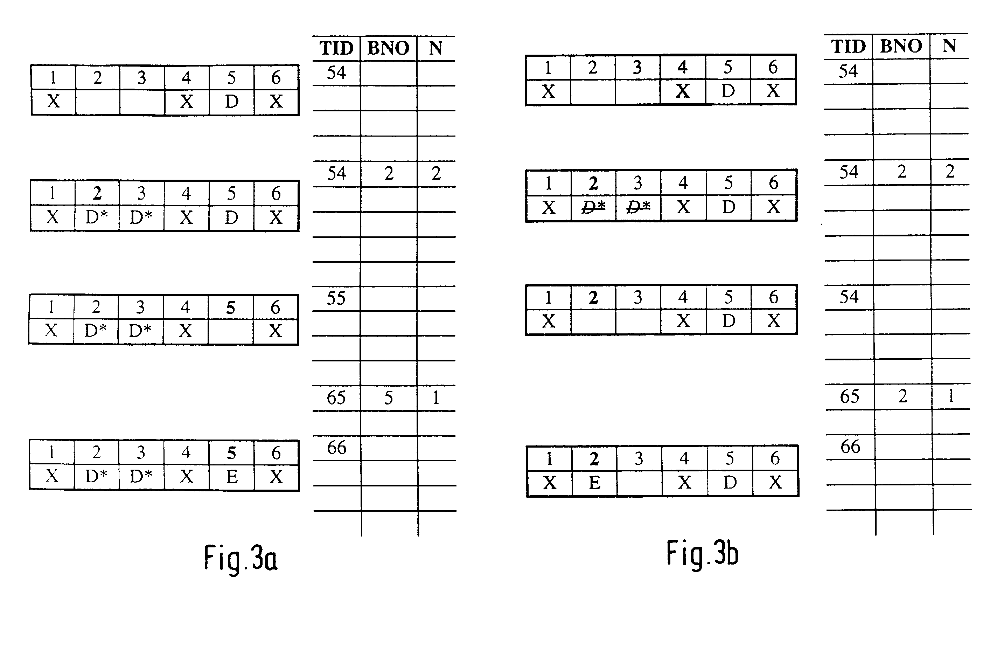

Die Figuren 3a und 3b zeigen die Speicherbelegung im Falle einer ungestörten bzw. im Falle einer gestörten Änderung der Daten. Die Figuren geben jeweils fünf Momentaufnahmen wieder, die den Inhalt von sechs Speicherblöcken betreffen. Beispielhaft werden hier die Speicherblöcke mit den Blocknummern 1 bis 6 betrachtet, wobei belegte Speicherblöcke mit einem "X", "D" oder "E" markiert sind. Freie Speicherblöcke sind nicht markiert. Außerdem ist der aktuelle Inhalt des Halbleiterspeichers angegeben. Die in den Figuren 3a und 3b dargestellte Änderung betrifft das Ersetzen von alten Daten D durch neue Daten D*.

In Fig 3a ist zunächst der Ausgangszustand wie folgt dargestellt: Von den sechs Speicherblöcken mit den Blocknummern 1 bis 6 sind lediglich zwei Speicherblöcke nicht belegt, nämlich die Speicherblöcke 2 und 3. Die anderen Speicherblöcke sind belegt, wobei der Speicherblock 5 die alten Daten D enthält. Im Halbleiterspeicher ist die aktuelle Transaktionsnummer TID = 54 gespeichert. Im Laufe des zuvor beschriebenen Verfahrens wird nun festgestellt, daß die Speicherblöcke 2 und 3 frei sind. Der Speicherbereich mit den Blocknummern 2 und 3 wird nun für die neuen Daten D* reserviert. Dazu wird in den Halbleiterspeicher die erste Blocknummer BNO = 2 und die Anzahl der Blöcke N = 2 zwischengespeichert. Der Transaktion wird die neue Transaktionsnummer TID = 55 zugewiesen. Konnten die neuen Daten D* ohne Störung in die Datenbank geschrieben werden, so wird der Blocknummernbereich aus dem Halbleiterspeicher gelöscht, und die aktuelle Transaktionsnummer wird dort auf TID = 55 gesetzt. Der Speicherblock BNO = 5, in dem die alten Daten D gespeichert waren, ist wieder für eine Transaktion freigegeben, beispielsweise für eine spätere Transaktion mit der Transaktionsnummer TID = 66. Während dieser Transaktion wird der Speicherblock mit Blocknummer BNO = 5 als zu beschreibender Speicherblock markiert; die Anzahl beträgt in diesem Fall N = 1.

Das Verfahren stellt also sicher, daß die alten Daten zumindest solange vollständig gespeichert bleiben, bis die neuen Daten störungsfrei in die Datenbank eingetragen wurden.

Fig. 3b zeigt nun den Verlauf des Verfahrens im Falle einer Störung. Ausgehend vom vorigen Zustand wie in Fig. 3a, soll wieder das im Speicherblock 5 enthaltene Datum D durch die neuen Daten D* ersetzt werden. Im Verlauf der Transaktion 55 konnten jedoch die freien Speicherblöcke 2 und 3 nicht erfolgreich mit den neuen Daten D* beschrieben werden. Die Transaktion wird dementsprechend als nicht ausgeführt gemeldet, der Blocknummernbereich wird aus dem Halbleiterspeicher gelöscht, die aktuelle Transaktionsnummer behält ihren Wert TID = 54 und die Speicherblöcke 2 und 3 werden weiterhin als freie Speicherblöcke behandelt. Beispielsweise wird in einer späteren Transaktion, die die aktuelle Transaktionsnummer von TID = 65 auf TID = 66 erhöht, der Speicherblock 2 als zu beschreibender Speicherblock markiert und mit neuen Daten E beschrieben. Die alten Daten D bleiben im Speicherblock 5 bestehen und werden nicht gelöscht.

Die Fig. 3b zeigt, daß im Falle einer Störung die alten Daten innerhalb der Datenbank erhalten bleiben und daß die Datenbank sehr schnell in den ursprünglichen Zustand zurückgeführt werden kann, etwa in den Ausgangszustand entsprechend der Momentaufnahme im Falle TID = 54.

Wie oben beschrieben wurde, kommt der zwischengespeicherten Transaktionsnummer TID also die Funktion eines Zählers zu, der angibt welche Transaktion zuletzt erfolgreich durchgeführt wurde. Die zwischengespeicherten Blocknummern geben an, welche Speicherblöcke von der derzeit laufenden Transaktion betroffen sind. Es reicht aus, wenn eine Transaktionsnummer, die erste Blocknummer und die Anzahl der Speicherblöcke zwischengespeichert werden. Damit können mit einer Zwischenspeicherung von lediglich drei Daten, nämlich 1 × TID, 1 × BNO und 1 × N, alle Transaktionen und Änderungen des Datenbakinhaltes sicher und schnell durchgeführt werden. Der Zwischenspeicher braucht lediglich drei Speicherplätze zu umfassen.

## Patentansprüche

1. Verfahren (100) zum gesicherten Ändern von Daten, die in einer Datenbank (DB) innerhalb von Speicherblöcken gespeichert sind, denen jeweils eine Blocknummer (BNO) zugeordnet ist, mit folgenden Schritten:
- für neue Daten (D*), die alte Daten (D) ersetzen sollen, wird innerhalb der Datenbank (DB) ein freier Speicherblock (BL*) gesucht (Schritt 130);
- die Blocknummer (BNO) dieses Speicherblockes (BL*) wird in einem nicht-flüchtigen Halbleiterspeicher (NVM) zwischengespeichert (Schritt 140);
- die neuen Daten (D*) werden in den freien Speicherblock (BL*) geschrieben (Schritt 150);
- es wird geprüft, ob das Speichern der neuen Daten (D*) gestört wurde (Schritt 160) ;
- falls das Schreiben störungsfrei durchgeführt wurde, wird die Blocknummer (BNO) des freien Speicherblocks (BL*), in den die neuen Daten (D*) geschrieben wurden, aus dem Halbleiterspeicher (NVM) gelöscht und wird derjenige Speicherblock (BL) freigegeben, in dem die alten Daten (D) gespeichert sind (Schritt 161); oder
- falls das Schreiben gestört wurde, wird der freie Speicherblock (BL*), in den die neuen Daten (D*) geschrieben werden sollten, weiterhin als freier Speicherblock (BL*) verwaltet (Schritt 165).

2. Verfahren (100) nach Anspruch 1, bei dem
zunächst aufgrund eines Änderungswunsches (RQ) eine Transaktionsnummer (TID) erzeugt wird, die einer Transaktion zugeordnet ist, die Datenänderungen umfaßt, die einen aus mindestens zwei freien Speicherblöcken bestehenden Speicherbereich benötigen (Schritt 120); und bei dem die Transaktionsnummer (TID) zusammen mit Angaben über den Speicherblock in dem nicht-flüchtigen Halbleiterspeicher (NVM) gespeichert wird (Schritt 140);

3. Verfahren nach Anspruch 2, bei dem
die Angaben über den Speicherbereich zumindest die Blocknummer des ersten und des letzten Speicherblocks innerhalb des Speicherbereiches enthalten.

4. Verfahren (100) nach Anspruch 2, bei dem
die Angaben über den Speicherbereich zumindest die Blocknummer (BNO) des ersten Speicherblocks innerhalb des Speicherbereiches und die Anzahl der den Speicherbereich bildenden Speicherblöcke enthalten.

5. Verfahren (100) nach Anspruch 2, bei dem aufgrund eines nachfolgenden Änderungswunsches erst dann die Daten geändert werden, wenn das Speichern aufgrund des vorhergehenden Änderungswunsches (RQ) nicht gestört wurde (Schritt 170).

6. Datenbanksystem mit einer Datenbank (DB), in der veränderbare Daten innerhalb von Speicherblöcken gespeichert sind, denen jeweils eine Blocknummer (BNO) zugeordnet ist, mit einer Steuerung (CPU) zum Steuern von Schreib- und Lesezugriffen auf die Datenbank (DB), und mit einem damit verbundenen nicht-flüchtigen Halbleiterspeicher (NVM),
- bei dem zum gesicherten Ändern der Daten die Steuerung (CPU) für neue Daten (D*), die alte Daten (D) ersetzen sollen, innerhalb der Datenbank (DB) einen freien Speicherblock (BL*) sucht, die Blocknummer (BNO) dieses Speicherblockes (BL*) in den nicht-flüchtigen Halbleiterspeicher (NVM) zwischenspeichert und die neuen Daten (D*) in den freien Speicherblock (BL*) schreibt sowie prüft, ob das Speichern der neuen Daten (D*) gestört wurde,
- und bei dem die Steuerung (CPU), falls das Schreiben störungsfrei durchgeführt wurde, die Blocknummer (BNO) des freien Speicherblocks (BL*), in den die neuen Daten (D*) geschrieben wurde, aus dem Halbleiterspeicher (NVM) löscht und denjenigen Speicherblock (BL) freigibt, in dem die alten Daten (D) gespeichert sind,
- oder bei dem die Steuerung (CPU), falls das Schreiben gestört wurde , den freien Speicherblock (BL*), in den die neuen Daten (D*) geschrieben werden sollten, weiterhin als freien Speicherblock (BL*) verwaltet.

7. Datenbanksystem nach Anspruch 6, bei dem die Steuerung (CPU) zunächst aufgrund eines Änderungswunsches (RQ) eine Transaktionsnummer (TID) erzeugt, die einer Transaktion zugeordnet ist, die Datenänderungen umfaßt, die einen aus mindestens zwei freien Speicherblöcken bestehenden Speicherbereich benötigen, und bei dem die Steuerung (CPU) die Transaktionsnummer (TID) zusammen mit Angaben über den Speicherbereich in dem nicht-flüchtigen Halbleiterspeicher (NVM) zwischenspeichert.

8. Datenbanksystem nach Anspruch 7, bei dem die Steuerung (CPU) aufgrund eines nachfolgenden Änderungswunsches erst dann die Datenänderung steuert, wenn das Speichern aufgrund des vorhergehenden Änderungswunsches (RQ) nicht gestört wurde.

9. Netzelement für ein digitales Nachrichtenübertragungsnetz mit einem Datenbanksystem, das eine Datenbank (DB) enthält, in der veränderbare Daten innerhalb von Speicherblöcken gespeichert sind, denen jeweils eine Blocknummer (BNO) zugeordnet ist, das eine Steuerung (CPU) zum Steuern von Schreib- und Lesezugriffen auf die Datenbank (DB) enthält, und das einen damit verbundenen nicht-flüchtigen Halbleiterspeicher (NVM) enthält,
- bei dem zum gesicherten Ändern der Daten die Steuerung (CPU) für neue Daten (D*), die alte Daten (D) ersetzen sollen, innerhalb der Datenbank (DB) einen freien Speicherblock (BL*) sucht, die Blocknummer (BNO) dieses Speicherblockes (BL*) in den nicht-flüchtigen Halbleiterspeicher (NVM) zwischenspeichert und die neuen Daten (D*) in den freien Speicherblock (BL*) schreibt sowie prüft, ob das Speichern der neuen Daten (D*) gestört wurde,
- und bei dem die Steuerung (CPU), falls das Schreiben störungsfrei durchgeführt wurde, die Blocknummer (BNO) des freien Speicherblocks (BL*), in den die neuen Daten (D*) geschrieben wurde, aus dem Halbleiterspeicher (NVM) löscht und denjenigen Speicherblock (BL) freigibt, in dem die alten Daten (D) gespeichert sind,
- oder bei dem die Steuerung (CPU), falls das Schreiben gestört wurde , den freien Speicherblock (BL*), in den die neuen Daten (D*) geschrieben werden sollten, weiterhin als freien Speicherblock (BL*) verwaltet.

10. Netzelement nach Anspruch 9, bei dem das Netzelement ein Cross-Connect, ein Add-Drop-Multiplexer oder ein Leitungs-Multiplexer für ein SDH-Nachrichtenübertragungnetz ist.
